# EUROPEAN PATENT SPECIFICATION

(11) **EP 1 410 260 B1**
(45) Date of publication and mention of the grant of the patent: **14.11.2007**
(21) Application number: 02748203.3
(22) Date of filing: 18.07.2002
(51) Int. Cl.: G06F 17/30

(54) **METHOD AND SYSTEM FOR REORGANIZING A TABLESPACE IN A DATABASE**
VERFAHREN UND SYSTEM ZUR NEUORGANISIERUNG EINES "TABLESPACE" IN EINER DATENBANK
PROCEDE ET SYSTEME DE REORGANISATION DE TABLES DANS UNE BASE DE DONNEES

(30) Priority: 19.07.2001 US 909033; 01.04.2002 US 113774
(43) Date of publication of application: 21.04.2004
(73) Proprietor: Computer Associates Think, Inc., Islandia, New York 11749 (US)
(72) Inventor: ISIP, Amando B. Jr. c/o Computer Associates, Islandia, NY 11749 (US); WEAVER, Stephen c/o Computer Associates, Islandia, NY 11749 (US); ZELENKA, Jospeh c/o Computer Associates, Islandia, NY 11749 (US)
(74) Representative: Dunlop, Hugh Christopher
(86) International application number: PCT/US2002/022907
(87) International publication number: WO 2003/009180

(56) References cited:
- US-A- 5 887 274
- SOCKUT G H ET AL: "Database reorganization-principles and practice" ACM COMPUTING SURVEYS, NEW YORK, NY, US, vol. 11, no. 4, December 1979 (1979-12), pages 371-395, XP002217091 ISSN: 0360-0300
- "DB2 Management Tools Package" IBM, [Online] November 1999 (1999-11), XP002252957 Retrieved from the Internet: <URL:http://www-3.ibm.com/software/data/db 2/os390/v6facts/db2utils.html> [retrieved on 2003-08-28]
- SOCKUT G H ET AL: "A METHOD FOR ON-LINE REORGANIZATION OF A DATABASE" IBM SYSTEMS JOURNAL, IBM CORP. ARMONK, NEW YORK, US, vol. 36, no. 3, 1997, pages 411-436, XP000701880 ISSN: 0018-8670
- BRUNI P.; PETRAS M.; STEEGMANS B. ; HIROYUKI SUZUKI: 'DB2 UDB FOR OS/390 VERSION 6 PERFORMANCE TOPICS', 24 June 1999, IBM XP007900787

## Description

### BACKGROUND

### Field of the Disclosure

The present disclosure relates to databases and, more particularly, to a method and system for reorganizing a tablespace in a database.

### Related Art

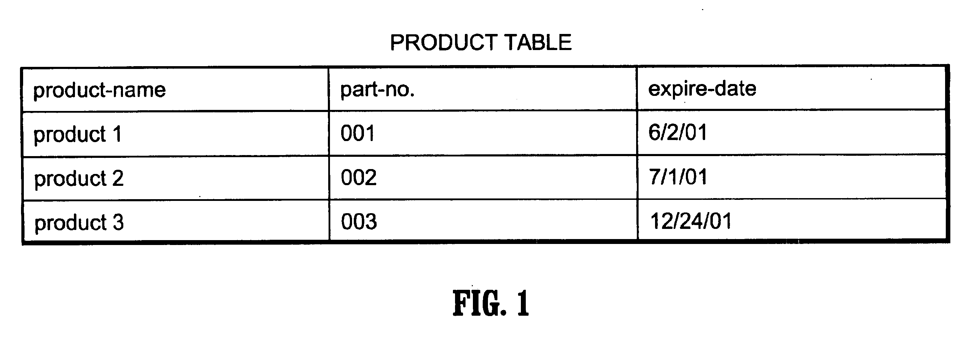

Data in a database may exist as tables in the form of columns and rows of data, as shown in Figure 1. In this example, a "product" table includes a plurality of columns (product-name, part-nos, expire-data) for storing rows of data related to different products (product 1, product 2, product 3, etc.). An index including a plurality of index keys related to the rows in the database may be provided to allow quick access to the data in the database. An index key is a minimum set of attributes that uniquely identifies each row in the database. For example, in the database illustrated Figure 1, "product-name" may be the key, assuming for the sake of simplicity that each product has a unique product name. In other words, the name of a product can be used to uniquely identify the row in which data regarding the product is stored in the database.

The data in each row of the database or relation should be analyzed to ensure that the data meets certain check constraints and maintains referential integrity. A constraint is a rule that restricts the values in a database or table. For example, in the database illustrated in Figure 1, an example of a constraint may be exp-date < May 16, 2001. That is to say, each value listed in the exp-date column should be less than May 16, 2001.

Referential integrity requires that all non-null foreign keys correspond to an actual key in some relation. A foreign key may be an attribute or a set of attributes in one table that constitutes a key in some other table. Foreign keys are used to demonstrate logical links between relations. For example, in the database illustrated in Figure 1, the part number foreign key (part-no) may relate the Product table to a Parts table (not shown). Referential integrity ensures that the part-no attribute remains a key in the Parts table so that the relationship between the Product table and the Parts table (not shown) remains valid. Generally, check constraints and requirements for referential integrity are predetermined by an administrator of the database and may vary depending on the applications utilizing the data in the database.

When data in a row of a database or relation does not satisfy constraints or fails to maintain referential integrity, the data may be deleted. In addition, the index keys corresponding to the rows from which the data is deleted may be deleted from the index. After deletion, both the database and index may have "holes" including rows with no data and/or spaces where the keys were deleted. In order to maximize efficient use of space in the database and the index, these holes should be removed.

Presently, a checking utility may perform checking and deletion of data that fails to comply with constraints or referential integrity. A separate reorganizing utility may then be used to reorganize the remaining rows of data to reassemble the database while eliminating rows with no data. In addition, the reorganizing utility may rebuild the index related to the reorganized table to eliminate spaces left by deleted keys.

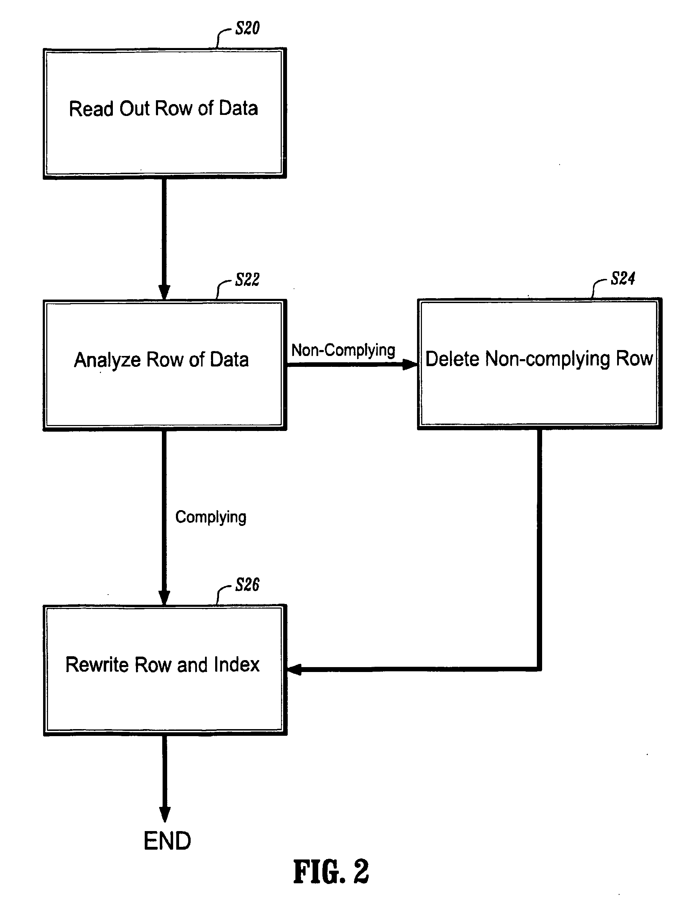

Operation of a checking utility for performing a method of checking data for compliance with constraints and for referential integrity is illustrated in Figure 2. In step S20, the checking utility reads out a row of data from the database. In step S22, the data read out from the database is analyzed to ensure that the data complies with predetermined check constraints and maintains referential integrity. If the data from a row fails to meet these requirements, the checking utility may delete the data in that row. In step S24, index keys corresponding to the deleted row may also be deleted from an index that relates to the database. In step S26, the database and index are rewritten with spaces left by the deleted data and the deleted keys.

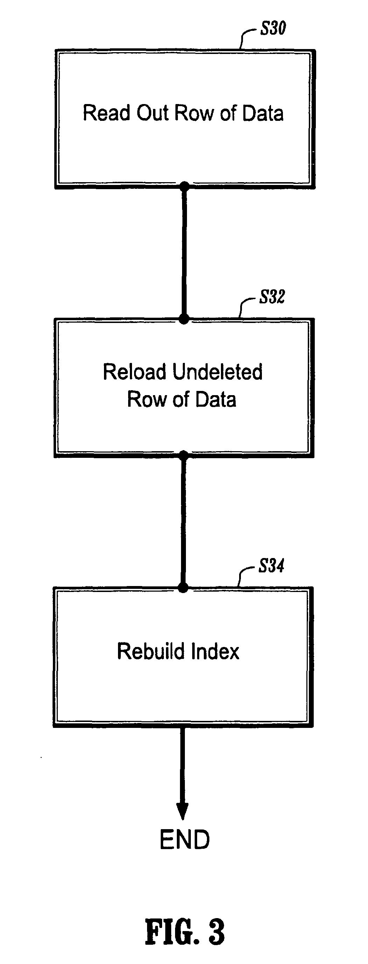

A reorganizing utility may then be invoked to eliminate the holes (e.g. spaces left by the deleted data and keys) in the database and index in the manner illustrated in Figure 3. In step S30, the reorganizing utility reads a row of the database. In step 32, the row is reloaded into the database if the data in the row has not been deleted by the checking utility. In step S34, the index space is rebuilt to include index keys which correspond only to the row reloaded into the database by the reorganizing utility in step S32.

While such methods of checking and reorganizing data in a database work, some operational characteristics of such methods can be improved. For example, several input/output operations are used to perform these methods. Each row is read out by the checking utility and then each page of the database and index is rewritten after non-conforming data is deleted. The reorganizing utility then reads out each line of the database again and reloads the rows from which data is not deleted into the database. The reorganizing utility then rebuilds the index space to correspond to the reloaded database. The input/output operations are needlessly repetitive and increase the probability of errors being introduced into the data in the table.

The repetitive nature of the these methods also has a cost in time. First, the checking utility runs completely to read out and rewrite the data in the database and index. Then the reorganizing utility reads out each row of the database with corresponding index keys in the index and reloads the database and rebuilds the index space. While both of these utilities are running, the data in the table is unavailable for user applications or for online transactions.

It would therefore, be desirable to provide a method and system for checking and reorganizing data in a database or relation in a more efficient manner so that the data in the table will only be unavailable for a relatively short period of time.

SOCKUT G H et al, "Database Reorganization - Principles and Practice" (ACM Computing Surveys, Vol. 11, No. 4, December 1979 (1979-12), pages 371-395) mentions a database management system ("SYSTEM 2000") that can unload records and indices in logical order and then reload in physical order. The reload command can be directed to reload only those record occurrences that satisfy specified criteria.

BRUNI P et al, "DB2 UDB for OS/390 Version 6 Performance Topics" (IBM, 1999) describes a command, "REORG DISCARD", which allows rows to be discarded during reorganisation of a relational database. The rows to be discarded are specified by a WHEN keyword which does not permit column to column comparisons. Index rebuilding is performed separately from reorganisation by means of multiple sort/build task pairs that are processed in parallel with each other.

### Summary of the Disclosure

In accordance with the invention there is provided: a method in accordance with claim 1; a system in accordance with claim 6; and a computer recording medium including computer readable code in accordance with claim 11.

### Brief Description of the Drawings

A more complete appreciation of the present disclosure and many of the attendant advantages thereof will be readily obtained as the same becomes better understood by reference to the following detailed description when considered in connection with the accompanying drawings, wherein:
Figure I is an illustration of a database in which data is stored.
Figure 2 is a flow chart illustrating operation of a check utility.
Figure 3 is a flow chart illustrating operation of a reorganization utility.
Figure 4 is a block diagram illustrating a computer system for implementing a method and system according to the present disclosure.
Figure 5 is an illustration of a database in which data is stored.
Figure 6 is a flow chart illustrating a method for reorganizing a database according to an embodiment of the present disclosure.
Figure 7 is a flow chart illustrating a method of organizing a database according to another embodiment of the present disclosure.

### Detailed Description

In describing the preferred embodiments of the present disclosure illustrated in the drawings, specific terminology is employed for sake of clarity. However, the present disclosure is not intended to be limited to the specific terminology so selected and it is to be understood that each specific element includes all technical equivalents which operate in a similar manner.

The present method and system provide for reading out a row of a database and checking the data in the row for compliance with constraints and for referential integrity. If the data in the row meets these requirements the row of data is reloaded into the database, otherwise, the row of data is eliminated. An index related to the database is then rebuilt to include only keys that relate to rows of data reloaded into the database. The row of data is read out, analyzed and reloaded or eliminated and the index related to the database is rebuilt in a single seamless process.

The system and method may be implemented in the form of a software application running on a computer system such as a mainframe such as the OS/390, personal computer (PC), handheld computer, server etc. The computer system may be linked to a database. The link may be, for example, via a direct link such as a direct hard wire or wireless connection, via a network connection such as a local area network, or via the Internet.

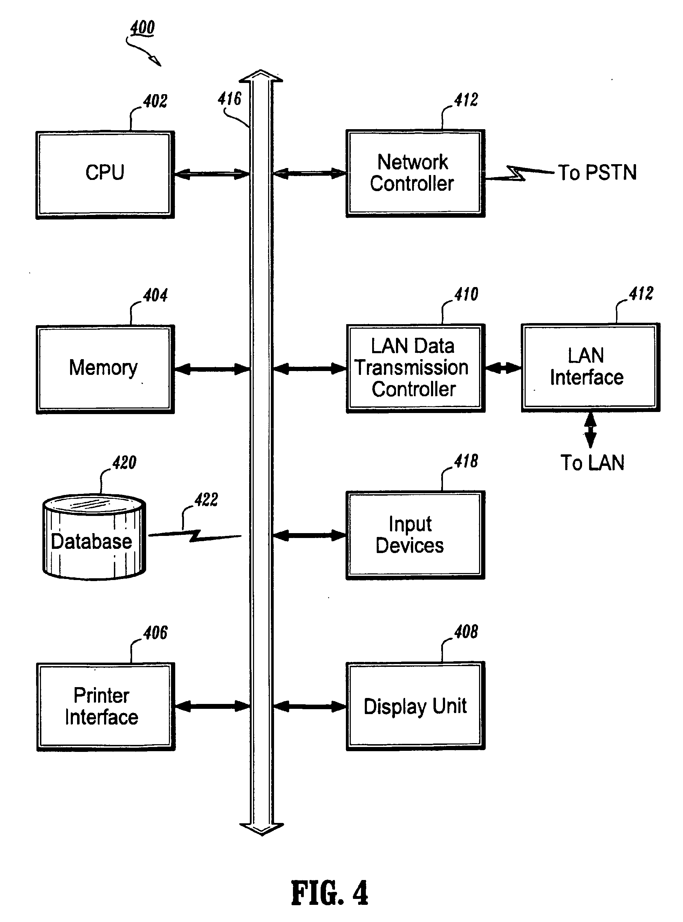

An example of a computer system capable of implementing the present system and method is shown in Figure 4. The computer system referred to generally as system 400 may include a central processing unit (CPU) 402, memory 404, a printer interface 406, a display unit 408, a LAN (local area network) data transmission controller 410, a LAN interface 412, a network controller 414, an internal bus 416 and one or more input devices 418 such as, for example, a keyboard, mouse, etc. As shown, the system 400 may be connected to a database 420 via a link 422.

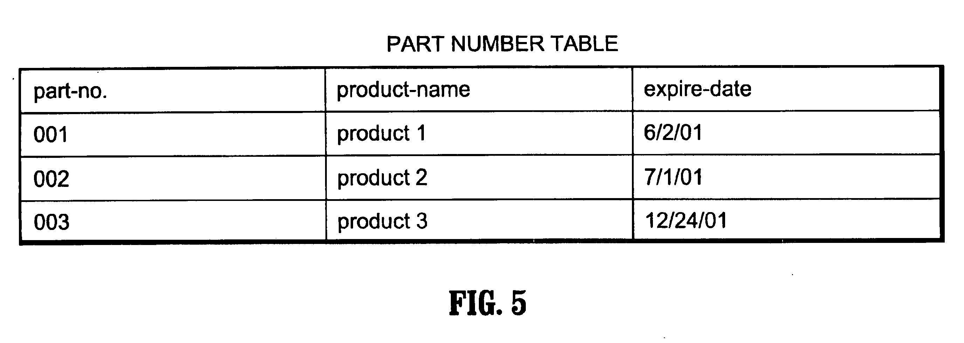

Figure 5 illustrates a database or relation called Part Number Table which includes columns representing a part number (part-no), a product name (product-name), and an expiration date (expire-date). The data in the database should meet certain constraints and should maintain referential integrity, as mentioned above. When a row of data fails to meet such requirements, the data in the row of data should be deleted and the keys related to the row of data are deleted from an index related to the database.

The present application is directed to providing a method of reorganizing a database which provides for both checking that the data in each row of the database complies with predetermined constraints and requirements for referential integrity while also providing for reorganization of the database and the index related to the database to eliminate any holes that may be left by deletion of data during the checking operation.

The method provides for reading out each row of data in a database and analyzing the data according to predetermined rules. The row of data is either retained or deleted according to the predetermined rules. A retained row of data is reloaded into the database. An index related to the database is rebuilt to include keys corresponding to the retained row of data. The method is repeated for each row of data in the database.

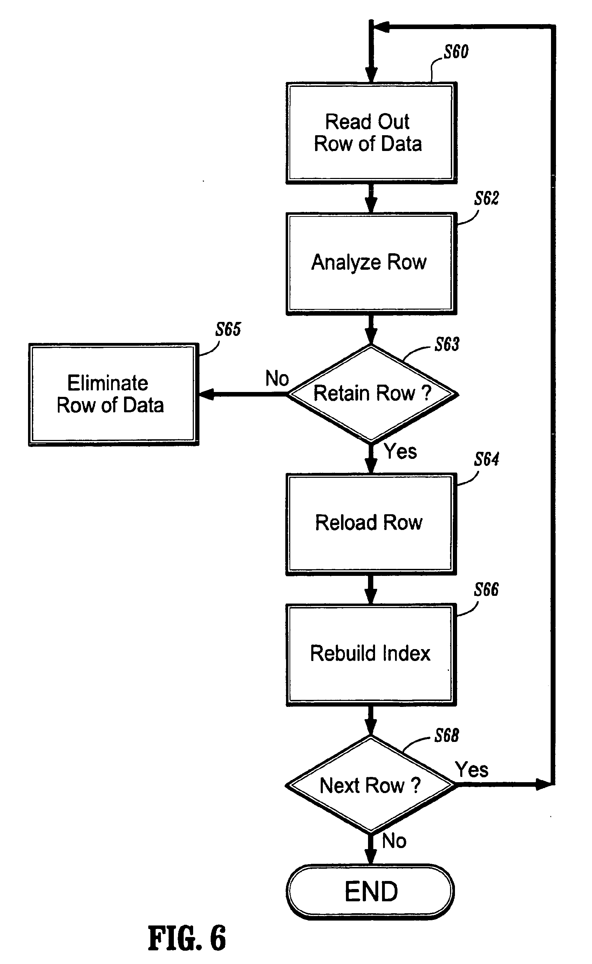

A method for reorganizing a database according to an embodiment of the present disclosure is explained with reference to Figure 6. In step S60, a row of data is read out of the database. The row of data is analyzed according to predetermined rules at step 62. The row of data is eliminated or retained in accordance with predetermined rules. The predetermined rules may include check constraints, or constraints and requirements for referential integrity. These rules may be predetermined by a database administrator. These rules may be modified by the database administrator when appropriate. If a row of data is not to be retained (No, step S63), the row of data is eliminated (step S65). If the row of data is to be retained (Yes, step S63), the row of data is reloaded into the database. In step S66, an index related to the database is rebuilt with index keys, or keys, corresponding to the retained row of data if the row of data has been reloaded into the database in step S64. At step S68 a determination is made as to whether another row, or a next row, is present in the index. If there is no next row (No, step S68), the method ends. If there is a next row (Yes, step S68), the process returns to step S60 where the next row is read out of the database. The method is repeated for each row in the database.

As noted above, when data in a row fails to satisfy a constraint or fails to meet requirements for referential integrity, the data is eliminated from the database. The data may be eliminated in a deleting step or may simply not be reloaded into the database. When data in a row satisfies the constraints and the requirements for referential integrity, the data can be retained and reloaded into the database into the next empty row of the database. An empty row is a row in which no data is currently stored. Alternatively, the retained row of data can be loaded into a new database in the next open row of the new database. Thus no empty spaces are left in the database. The resulting reloaded database or the new database include only rows of data which comply with the constraints and the requirements for referential integrity. In addition, the index related to the database can be rebuilt on the fly and includes keys that relate to rows that exist in the reloaded database.

Using the method of the present disclosure, each row of data can be read out and rewritten only once, so that the probability of an error occurring during the input and output stages of the method can be reduced. In addition, only one utility need be run in order to both check and reorganize the data of the rows of the table, to reduce the time used for reorganizing tablespaces in a database. Thus, the down time during which the table is unavailable to user applications and online commerce can be reduced.

According to another embodiment of the present disclosure, a method of reorganizing a database in which the database is divided into a plurality of partitions is provided.

The method includes a step of separating the database and a related index into a plurality of partitions. One of the plurality of partitions of the database is selected along with a related partition of the related index and a row of data of the one selected partition is read out of the partition. The row of data analyzed according to predetermined rules, is either retained or eliminated according to the predetermined rules. A retained row of data is reloaded into the selected one partition. The related partition of the related index is rebuilt to include keys corresponding to the retained row of data reloaded into the selected one partition of the database. Each row of data in the partition is read out and each partition is analyzed. Only one partition of the plurality of partitions is analyzed a time.

As mentioned above, while the reorganization method is functioning, the data in the database is unavailable to applications and for e-commerce. While reducing the time required to perform the reorganizing and checking functions reduces the amount of time the data is unavailable, the data is still completely unavailable for some period of time. Partitioning the database into a plurality of partitions and reorganizing each partition independently allows the other partitions of the database to remain available to user applications and for e-commerce. In this manner, at least some of the data ion the database will always be available.

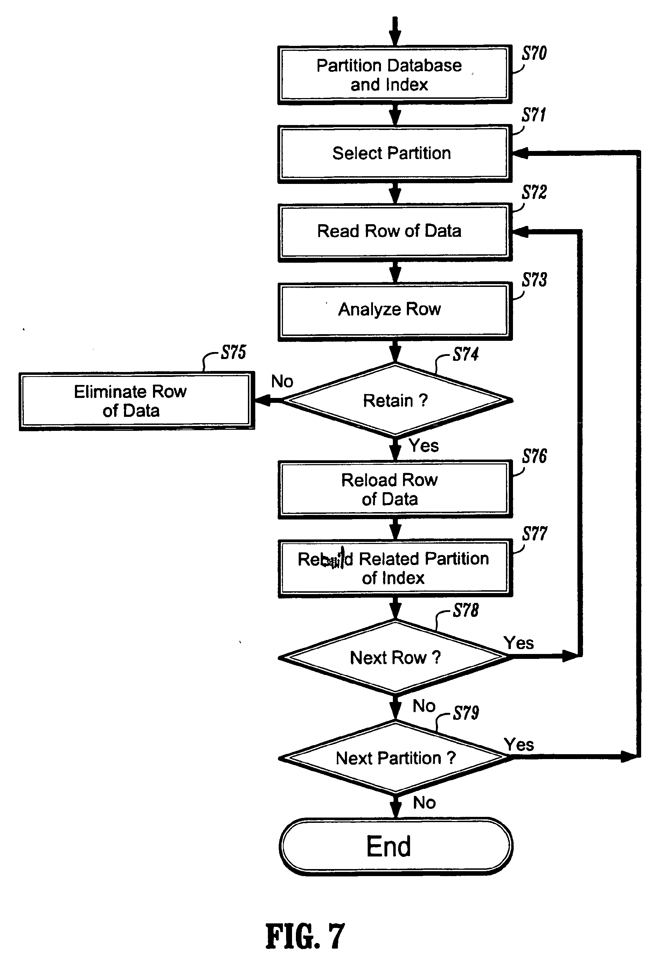

The method is further described with reference to Figure 7. At step S70 a database and a related index are divided into partitions, respectively. The partitions of the related index correspond to those of the database. The number of partitions may depend on the relative size of the database and may be adjusted by a user or the database administrator. This flexibility allows the method to be adapted for use in many different kinds of databases. In step S71 one partition of the plurality of plurality of the database is selected for reorganization along with a related partition of the related index. This selected one partition of the database may be any of the plurality of partitions. A user or the database administrator may designate which of the partitions to be reorganized first based on factors such as frequency of use or perhaps based on the nature of the data contained in the partition. It should be noted that the user or database administrator also sets the constraints and requirements for referential integrity and is therefore likely to be in the best position to determine the best order in which to organize the partitions. Steps S72 to step S78 operate substantially as steps S62 to S68 described above with reference to Figure 6 except that rows of data are read from and reloaded into a selected partition of the database and a related partition of the index is rebuilt. If the next row is not present (No, step 78), the method may proceed to step 79 where a determination may be made as to whether another partition, or a next partition of the database is present. If no next partition is present (No, step 79), the method ends. If the next partition is present (Yes, step 79) the method may return to step 71 where the next partition is selected. If at step 78, the next row is present (Yes, step 78) the method may return to step 72 and the next row of data is read out of the selected one partition of the database.

As noted above, when data in a row fails to satisfy a constraint or fails to meet requirements for referential integrity, the data is eliminated from the database. The data may be eliminated in a deleting step or may simply not be reloaded into the database. When data in a row satisfies the constraints and the requirements for referential integrity, the data can be retained and reloaded into the selected partition of the database into the next empty row. Alternatively, the retained row of data can be loaded into a partition of a new database in the next open row of the new database. Thus no empty spaces are left in either the selected partition of the database or the partition of the new database. The resulting reloaded partition of the database or the partition of the new database include only rows of data which comply with the constraints and the requirements for referential integrity. In addition, the related partition of the index related to the database or the new database can be rebuilt on the fly and includes keys that relate to rows that exist in the reloaded partition of the database or the partition of the new database.

While the above-described method and system are applicable to databases in general, a specific example of such a database is a database constructed in a DB2 environment.

The present disclosure may be conveniently implemented using one or more conventional general purpose digital computers and/or servers programmed according to the teachings of the present specification. Appropriate software coding can readily be prepared by skilled programmers based on the teachings of the present disclosure. The present disclosure may also be implemented by the preparation of application specific integrated circuits or by interconnecting an appropriate network of conventional components.

Numerous additional modifications and variations of the present disclosure are possible in view of the above-teachings. It is therefore to be understood that within the scope of the appended claims, the present invention may be practiced other than as specifically described herein.

## Claims

1. A method of reorganizing a database, said database having a related index, the method comprising:
reading (S60; S72) a row of data from the database;
analyzing (S62; S73) the row of data read out from the database according to at least one predetermined rule, wherein the rule is a requirement for referential integrity;
determining (S63; S74) whether to eliminate or retain the row of data based on said at least one predetermined rule, and
(a) when it is determined that the row of data complies with the at least one predetermined rule, retaining (S64; S76) the row of data by loading the row of data into the database in the first row of the database that contains no data, and rebuilding (S66; S77) the index to include keys that correspond to the retained row of data; or
(b) when it is determined that the row of data does not comply with the at least one predetermined rule, eliminating (S65; S75) the row of data; and
if a next row of data is present, performing the preceding steps for the next row of data

2. The method of claim 1, comprising partitioning (S70) the database and a related index into a plurality of partitions;
selecting (S71) one partition of the plurality of partitions of the database and a related partition of the related index; wherein the steps of reading, analyzing, determining, retaining and eliminating are applied to the selected one partition of the database and wherein the step of rebuilding is applied to a related partition of the related index, the method further comprising repeating the selecting, reading, analyzing, determining, retaining, eliminating and rebuilding for each partition in the database.

3. The method of claim 2, wherein the retaining step (S64; S76) comprises:
loading the row of data into the selected one partition of the database in a first open row of the selected one partition of the database, wherein the first open row is a first row in the selected one partition of the database that contains no data.

4. The method of any one of the preceding claims, wherein the row of data is eliminated by deleting the row of data.

5. The method of any one of claims 1 to 4, wherein the requirement for referential integrity is a rule requiring all non-null foreign keys in the database to correspond to an actual key in another database.

6. A system for reorganizing a database, said database having a related index, the system comprising:
a reading device adapted to read out a row of data from the database;
an analyzing device adapted to analyze the row of data according to at least one predetermined rule, wherein the rule is a requirement for referential integrity;
a loading device adapted to retain the row of data when it is determined that the row of data complies with the at least one predetermined rule, by loading the row of data into the database in the first row of the database that contains no data;
an eliminating device adapted to eliminate the row of data when it is determined that the row of data does not comply with the at least one predetermined rule; and
a rebuilding device adapted to rebuild the index to include keys that correspond to the retained row of data;
wherein
the devices are adapted to perform their respective functions for a next row of data, if a next row of data is present.

7. The system of claim 6, comprising:
a partitioning device adapted to partition the database and a related index into a plurality of partitions; and
a partition selecting device adapted to select one partition of the plurality of partitions of the database and a related partition of the related index; wherein
the reading device is adapted to read a row of data out from the selected one partition of the database;
the analyzing device is adapted to analyze the row of data read out from the selected one partition;
the loading device is adapted to load the row of data into the selected one partition of the database; and
the rebuilding device is adapted to rebuild the related partition of the related index; wherein
the system is adapted to reorganize each row of the selected one partition of the database and each partition of the plurality of partitions of the database.

8. The system of claim 7, wherein the loading device is adapted to load the row of data into the selected one partition of the database in a first open row of the database, wherein the first open row is a first row in the selected one partition of the database that contains no data.

9. The system of any one of claims 6 to 8, wherein the eliminating device is adapted to eliminate the row of data by deleting the row of data.

10. The system of any one of claims 6 to 9, wherein the requirement for referential integrity is a rule requiring all non-null foreign keys in the database to correspond to an actual key in another database.

11. A computer recording medium including computer executable code for reorganizing a database, said database having a related index, and said computer executable code including:
reading code for reading (S60; S72) out a row of data from the database;
analyzing code for analyzing (S62; S73) the row of data read out from the database according to at least one predetermined rule, wherein the rule is a requirement for referential integrity;
determining code for determining (S63; S74) whether to eliminate or retain a row of data based on said at least one predetermined rule;
loading code for retaining (S64; S76) the row of data when it is determined that the row of data complies with the at least one predetermined rule, by loading the row of data into the database in the first row of the database that contains no data;
eliminating code for eliminating (S65; S75) the row of data when it is determined that the row of data does not comply with the at least one predetermined rule;
rebuilding code for rebuilding (S66; S77) the index to include keys corresponding to the retained row of data; and
repeating code for performing the reading, analyzing, determining, retaining, eliminating and rebuilding for a next row of data, if a next row of data is present.

12. A computer recording medium including computer executable code in accordance with claim 11, further including:
partitioning code for partitioning (S70) the database and a related index into a plurality of partitions;
partition selecting code for selecting (S71) one partition of the plurality of partitions of the database and a related partition of the related index, wherein
the reading code is configured for reading a row of data out from the selected one partition;
the analyzing code is configured for analyzing the row of data read out from the selected one partition;
the loading code is configured for loading the row of data into the selected one partition of the database;
the rebuilding code is configured for rebuilding the related partition of the related index, and wherein the repeating code comprises:
row repeating code for repeating the reading, analyzing, determining, retaining, eliminating and rebuilding for each row in the selected one partition of the database; and
partition repeating code for repeating the selecting, reading, analyzing, determining, retaining, eliminating and rebuilding for each partition in the database.

13. The computer recording medium of claim 12, wherein the loading code is adapted to load the row of data into the selected one partition of the database in a first open row of the selected one partition of the database, wherein
the first open row is a first row in the selected one partition of the database that contains no data.

14. The computer recording medium of any of claims 11 to 13, wherein the eliminating code comprises deleting code for deleting the row of data.

15. The computer recording medium of any one of claims 11 to 14, wherein the requirement for referential integrity is a rule requiring all non-null foreign keys in the database to correspond to an actual key in another database.

## Patentansprüche

1. Verfahren zur Neuorganisation einer Datenbank, wobei die Datenbank einen zugehörigen Index hat und das Verfahren Folgendes umfasst:
Lesen (S60; S72) einer Datenzeile aus der Datenbank;
Analysieren (S62; S73) der Datenzeile, die gemäß mindestens einer vorab festgelegten Regel aus der Datenbank ausgelesen wurde, wobei die Regel eine Voraussetzung für referenzielle Integrität ist;
Bestimmen (S63 ; S74), ob die Datenzeile basierend auf mindestens einer vorab festgelegten Regel eliminiert oder beibehalten werden soll, und
(a) wenn bestimmt wird, dass die Datenzeile die mindestens eine vorab festgelegte Regel erfüllt, Beibehalten (S64; S76) der Datenzeile, indem die Datenzeile in die Datenbank in die erste Zeile der Datenbank, die keine Daten enthält, geladen wird, und Neuerstellen (S66; S77) des Index, so dass dieser Schlüssel beinhaltet, die der beibehaltenen Datenzeile entsprechen; oder
(b) wenn bestimmt wird, dass die Datenzeile nicht die mindestens eine vorab festgelegte Regel erfüllt, Eliminieren (S65; S75) der Datenzeile; und
wenn eine nächste Datenzeile vorhanden ist, Durchführen der vorherigen Schritte für die nächste Datenzeile.

2. Verfahren nach Anspruch 1, umfassend das Partitionieren (S70) der Datenbank und eines zugehörigen Index in mehrere Partitionen;
Auswählen (S71) einer Partition der mehreren Partitionen der Datenbank und einer zugehörigen Partition des zugehörigen Index; wobei die Schritte für das Lesen, Analysieren, Bestimmen, Beibehalten und Eliminieren auf die gewählte eine Partition der Datenbank angewendet werden und wobei der Schritt für das Neuerstellen auf eine zugehörige Partition des zugehörigen Index angewendet wird, wobei das Verfahren zudem das Auswählen, Lesen, Analysieren, Bestimmen, Beibehalten, Eliminieren und Neuerstellen für jede Partition in der Datenbank umfasst.

3. Verfahren nach Anspruch 2, wobei der Schritt für das Beibehalten (S64; S76) Folgendes umfasst:
Laden der Datenzeile in die gewählte eine Partition der Datenbank in eine erste offene Zeile der gewählten einen Partition der Datenbank, wobei die erste offene Zeile eine erste Zeile in der gewählten einen Partition der Datenbank ist, die keine Daten enthält.

4. Verfahren nach einem der vorhergehenden Ansprüche, wobei die Datenzeile durch das Löschen der Datenzeile eliminiert wird.

5. Verfahren nach einem der vorhergehenden Ansprüche 1 bis 4, wobei die Voraussetzung für referenzielle Integrität eine Regel ist, die es erfordert, dass alle Nicht-Null-Fremdschlüssel in der Datenbank einem aktuellen Schlüssel in einer anderen Datenbank entsprechen.

6. System zur Neuorganisation einer Datenbank, wobei die Datenbank einen zugehörigen Index hat und das System Folgendes umfasst:
eine Lesevorrichtung, die zum Auslesen einer Datenzeile aus der Datenbank ausgelegt ist;
eine Analysevorrichtung, die zum Analysieren der Datenzeile gemäß mindestens einer vorab festgelegten Regel ausgelegt ist, wobei die Regel eine Voraussetzung für referenzielle Integrität ist;
eine Ladevorrichtung, die zum Beibehalten der Datenzeile ausgelegt ist, wenn bestimmt wird, dass die Datenzeile die mindestens eine vorab festgelegte Regel erfüllt, indem die Datenzeile in die Datenbank in die erste Zeile der Datenbank, die keine Daten enthält, geladen wird;
eine Eliminierungsvorrichtung, die zum Eliminieren der Datenzeile ausgelegt ist, wenn bestimmt wird, dass die Datenzeile nicht die mindestens eine vorab festgelegte Regel erfüllt; und
eine Neuerstellungsvorrichtung, die zum Neuerstellen des Index ausgelegt ist, um Schlüssel zu beinhalten, die der beibehaltenen Datenzeile entsprechen;
wobei die Vorrichtungen ausgelegt sind, um ihre jeweiligen Funktionen für eine nächste Datenzeile auszuführen, wenn eine nächste Datenzeile vorhanden ist.

7. System nach Anspruch 6, umfassend:
eine Partitionierungsvorrichtung, die zum Partitionieren der Datenbank und eines zugehörigen Index in mehrere Partitionen ausgelegt ist; und
eine Partitionsauswahlvorrichtung, die zum Auswählen einer Partition der mehreren Partitionen der Datenbank und einer zugehörigen Partition des zugehörigen Index ausgelegt ist; wobei
die Lesevorrichtung zum Auslesen einer Datenzeile aus der gewählten einen Partition der Datenbank ausgelegt ist;
die Analysevorrichtung zum Analysieren der Datenzeile, die aus der gewählten einen Partition ausgelesen wurde, ausgelegt ist;
die Ladevorrichtung zum Laden der Datenzeile in die gewählte eine Partition der Datenbank ausgelegt ist; und
die Neuerstellungsvorrichtung zum Neuerstellen der zugehörigen Partition des zugehörigen Index ausgelegt ist; wobei
das System zum Neuorganisieren jeder Zeile der gewählten einen Partition der Datenbank und jeder Partition der mehreren Partitionen der Datenbank ausgelegt ist.

8. System nach Anspruch 7, wobei die Ladevorrichtung zum Laden der Datenzeile in die gewählte eine Partition der Datenbank in eine erste offene Zeile der Datenbank ausgelegt ist, wobei die erste offene Zeile eine erste Zeile in der gewählten einen Partition der Datenbank ist, die keine Daten enthält.

9. System nach einem der Ansprüche 6 bis 8, wobei die Eliminierungsvorrichtung zum Eliminieren der Datenzeile durch Löschen der Datenzeile ausgelegt ist.

10. System nach einem der Ansprüche 6 bis 9, wobei die Voraussetzung für referenzielle Integrität eine Regel ist, die es erfordert, dass alle Nicht-Null-Fremdschlüssel in der Datenbank einem aktuellen Schlüssel in einer anderen Datenbank entsprechen.

11. Ein Computer-Aufzeichnungsmedium, das einen auf einem Computer ausführbaren Code zur Neuorganisation einer Datenbank umfasst, wobei die Datenbank einen zugehörigen Index hat und der auf einem Computer ausführbare Code Folgendes umfasst:
einen Auslesecode zum Auslesen (S60; S72) einer Datenzeile aus der Datenbank;
einen Analysecode zum Analysieren (S62; S73) der Datenzeile, die gemäß mindestens einer vorab festgelegten Regel aus der Datenbank ausgelesen wurde, wobei die Regel eine Voraussetzung für referenzielle Integrität ist;
einen Bestimmungscode zum Bestimmen (S63; S74), ob die Datenzeile basierend auf der mindestens einen vorab festgelegten Regel eliminiert oder beibehalten werden soll;
einen Ladecode zum Beibehalten (S64; S76) der Datenzeile, wenn bestimmt wird, dass die Datenzeile die mindestens eine vorab festgelegte Regel erfüllt, indem die Datenzeile in die Datenbank in die erste Zeile der Datenbank, die keine Daten enthält, geladen wird;
einen Eliminierungscode zum Eliminieren (S65; S75) der Datenzeile, wenn bestimmt wird, dass die Datenzeile nicht die mindestens eine vorab festgelegte Regel erfüllt;
einen Neuerstellungscode zum Neuerstellen (S66; S77) des Index, so dass dieser Schlüssel beinhaltet, die der beibehaltenen Datenzeile entsprechen, und
einen Wiederholungscode zum Durchführen von Lesen, Analysieren, Bestimmen, Beibehalten, Eliminieren und Neuerstellen für eine nächste Datenzeile, wenn eine nächste Datenzeile vorhanden ist.

12. Ein Computer-Aufzeichnungsmedium, das einen auf einem Computer ausführbaren Code nach Anspruch 11 umfasst, ferner umfassend:
einen Partitionsierungscode für das Partitionieren (S70) der Datenbank und eines zugehörigen Index in mehrere Partitionen;
einen Partitionsauswahlcode für das Auswählen (S71) einer Partition der mehreren Partitionen der Datenbank und einer zugehörigen Partition des zugehörigen Index; wobei
der Lesecode zum Auslesen einer Datenzeile aus der gewählten einen Partition konfiguriert ist;
der Analysecode zum Analysieren der Datenzeile, die aus der gewählten einen Partition ausgelesen wird, konfiguriert ist;
der Ladecode zum Laden der Datenzeile in die gewählte eine Partition der Datenbank konfiguriert ist;
der Neuerstellungscode zum Neuerstellen der zugehörigen Partition des zugehörigen Index konfiguriert ist, und wobei der Wiederholungscode Folgendes umfasst:
einen Zeilenwiederholungscode zum Wiederholen von Lesen, Analysieren, Bestimmen, Beibehalten, Eliminieren und Neuerstellen für jede Zeile in der gewählten einen Partition der Datenbank; und
einen Partitionswiederholungscode zum Wiederholen von Auswählen, Lesen, Analysieren, Bestimmen, Beibehalten, Eliminieren und Neuerstellen für jede Partition in der Datenbank.

13. Das Computer-Aufzeichnungsmedium nach Anspruch 12, wobei der Ladecode zum Laden der Datenzeile in die gewählte eine Partition der Datenbank in eine erste offene Zeile der gewählten einen Partition der Datenbank ausgelegt ist, wobei
die erste offene Zeile eine erste Zeile in der gewählten einen Partition der Datenbank ist, die keine Daten enthält.

14. Das Computer-Aufzeichnungsmedium nach einem der Ansprüche 11 bis 13, wobei der Eliminierungscode einen Löschcode für das Löschen der Datenzeile umfasst.

15. Das Computer-Aufzeichnungsmedium nach einem der Ansprüche 11 bis 14, wobei die Voraussetzung für referenzielle Integrität eine Regel ist, die es erfordert, dass alle Nicht-Null-Fremdschlüssel in der Datenbank einem aktuellen Schlüssel in einer anderen Datenbank entsprechen.

## Revendications

1. Procédé de réorganisation d'une base de données, ladite base de données comportant un index associé, le procédé comprenant les étapes consistant à :
lire (S60 ; S72) une rangée de données dans la base de données ;
analyser (S62 ; S73) la rangée de données lue dans la base de données conformément à au moins une règle prédéterminée, la règle consistant en une exigence relative à l'intégrité référentielle ;
déterminer (S63 ; S74) s'il faut éliminer ou conserver la rangée de données sur la base de ladite règle prédéterminée, et
(a) lorsqu'il est déterminé que la rangée de données est conforme à la ou aux règles prédéterminées, conserver (S64 ; S76) la rangée de données en chargeant celle-ci dans la base de données dans la première rangée de la base de données qui ne contient pas de données, et reconstruire (S66; S77) l'index pour inclure des clés qui correspondent à la rangée de données conservée ; ou
(b) lorsqu'il est déterminé que la rangée de données n'est pas conforme à la ou aux règles prédéterminées, éliminer (S65; S75) la rangée de données ; et
si une rangée de données suivante est présente, exécuter les étapes précédentes pour la rangée de données suivante.

2. Procédé selon la revendication 1, comprenant les étapes consistant à diviser (S70) la base de données et un index associé en de multiples partitions ;
sélectionner (S71) une partition parmi les multiples partitions de la base de données et une partition associée de l'index associé ; les étapes de lecture, d'analyse, de détermination, de conservation et d'élimination étant appliquées à la partition sélectionnée de la base de données et l'étape de reconstruction étant appliquée à une partition associée de l'index associé, le procédé comprenant en outre les étapes consistant à répéter la sélection, la lecture, l'analyse, la détermination, la conservation, l'élimination et la reconstruction pour chaque partition de la base de données.

3. Procédé selon la revendication 2, dans lequel l'étape de conservation (S64 ; S76) consiste à :
charger la rangée de données dans la partition sélectionnée de la base de données dans une première rangée ouverte de la partition sélectionnée de la base de données, la première rangée ouverte étant une première rangée dans la partition sélectionnée de la base de données qui ne contient pas de données.

4. Procédé selon l'une quelconque des revendications précédentes, dans lequel la rangée de données est éliminée par suppression.

5. Procédé selon l'une quelconque des revendications 1 à 4, dans lequel l'exigence relative à l'intégrité référentielle constitue une règle exigeant que toutes les clés étrangères non nulles de la base de données correspondent à une clé existante d'une autre base de données.

6. Système pour réorganiser une base de données, ladite base de données comportant un index associé, le système comprenant :
un dispositif de lecture adapté pour lire une rangée de données dans la base de données ;
un dispositif d'analyse adapté pour analyser la rangée de données conformément à au moins une règle prédéterminée, la règle constituant une exigence relative à l'intégrité référentielle ;
un dispositif de charge adapté pour conserver la rangée de données lorsqu'il est déterminé que la rangée de données est conforme à la ou aux règles prédéterminées, en chargeant la rangée de données dans la base de données dans la première rangée de la base de données qui ne contient pas de données ;
un dispositif d'élimination adapté pour éliminer la rangée de données lorsqu'il est déterminé que la rangée de données n'est pas conforme à la ou aux règles prédéterminées ; et
un dispositif de reconstruction adapté pour reconstruire l'index pour inclure des clés qui correspondent à la rangée de données conservée ;
dans lequel
les dispositifs sont adaptés pour exécuter leurs fonctions respectives pour une rangée de données suivante si une rangée de données suivante est présente.

7. Système selon la revendication 6, comprenant :
un dispositif de division adapté pour diviser la base de données et un index associé en de multiples partitions ; et
un dispositif de sélection de partition adapté pour sélectionner une partition parmi les multiples partitions de la base de données et une partition associée de l'index associé ; dans lequel
le dispositif de lecture est adapté pour lire une rangée de données dans la partition sélectionnée de la base de données ;
le dispositif d'analyse est adapté pour analyser la rangée de données lue dans la partition sélectionnée ;
le dispositif de charge est adapté pour charger la rangée de données dans la partition sélectionnée de la base de données ; et
le dispositif de reconstruction est adapté pour reconstruire la partition associée de l'index associé ;
le système étant adapté pour réorganiser chaque rangée de la partition sélectionnée de la base de données et chaque partition de la multiplicité de partitions de la base de données.

8. Système selon la revendication 7, dans lequel le dispositif de charge est adapté pour charger la rangée de données dans la partition sélectionnée de la base de données dans une première rangée ouverte de la base de données,
la première rangée ouverte étant une première rangée dans la partition sélectionnée de la base de données qui ne contient pas de données.

9. Système selon l'une quelconque des revendications 6 à 8, dans lequel le dispositif d'élimination est adapté pour éliminer la rangée de données par suppression.

10. Système selon l'une quelconque des revendications 6 à 9, dans lequel l'exigence relative à l'intégrité référentielle constitue une règle exigeant que toutes les clés étrangères non nulles de la base de données correspondent à une clé existante d'une autre base de données.

11. Support d'enregistrement informatique comprenant un code exécutable par ordinateur pour réorganiser une base de données, ladite base de données comportant un index associé, et ledit code exécutable par ordinateur comprenant :
un code de lecture pour lire (S60 ; S72) une rangée de données dans la base de données ;
un code d'analyse pour analyser (S62 ; S73) la rangée de données lue dans la base de données conformément à au moins une règle prédéterminée, la règle consistant en une exigence relative à l'intégrité référentielle ;
un code de détermination pour déterminer (S63 ; S74) s'il faut éliminer ou conserver une rangée de données sur la base de ladite règle prédéterminée ;
un code de charge pour conserver (S64 ; S76) la rangée de données lorsqu'il est déterminé que la rangée de données est conforme à la ou aux règles prédéterminées, en chargeant la rangée de données dans la base de données dans la première rangée de la base de données qui ne contient pas de données ;
un code d'élimination pour éliminer (S65 ; S75) la rangée de données lorsqu'il est déterminé que la rangée de données n'est pas conforme à la ou aux règles prédéterminées ;
un code de reconstruction pour reconstruire (S66 ; S77) l'index pour inclure des clés correspondant à la rangée de données conservée ; et
un code de répétition pour exécuter la lecture, l'analyse, la détermination, la conservation, l'élimination et la reconstruction pour une rangée de données suivante si une rangée de données suivante est présente.

12. Support d'enregistrement informatique comprenant un code exécutable par ordinateur conformément à la revendication 11, lequel comprend en outre :
un code de division pour diviser (S70) la base de données et un index associé en de multiples partitions ;
un code de sélection de partition pour sélectionner (S71) une partition parmi les multiples partitions de la base de données et une partition associée de l'index associé, dans lequel
le code de lecture est configuré pour lire une rangée de données dans la partition sélectionnée ;
le code d'analyse est configuré pour analyser la rangée de données lue dans la partition sélectionnée ;
le code de charge est configuré pour charger la rangée de données dans la partition sélectionnée de la base de données ;
le code de reconstruction est configuré pour reconstruire la partition associée de l'index associé, et dans lequel le code de répétition comprend :
un code de répétition de rangée pour répéter la lecture, l'analyse, la détermination, la conservation, l'élimination et la reconstruction pour chaque rangée de la partition sélectionnée de la base de données ; et
un code de répétition de partition pour répéter la sélection, la lecture, l'analyse, la détermination, la conservation, l'élimination et la reconstruction pour chaque partition de la base de données.

13. Support d'enregistrement informatique selon la revendication 12, dans lequel le code de charge est adapté pour charger la rangée de données dans la partition sélectionnée de la base de données dans une première rangée ouverte de la partition sélectionnée de la base de données,
la première rangée ouverte étant une première rangée de la partition sélectionnée de la base de données qui ne contient pas de données.

14. Support d'enregistrement informatique selon l'une quelconque des revendications 11 à 13, dans lequel le code d'élimination comprend un code de suppression pour supprimer la rangée de données.

15. Support d'enregistrement informatique selon l'une quelconque des revendications 11 à 14, dans lequel l'exigence relative à l'intégrité référentielle constitue une règle exigeant que toutes les clés étrangères non nulles de la base de données correspondent à une clé existante d'une autre base de données.
